(19) Europäisches Patentamt
European Patent Office
Office européen des brevets

(11) EP 2 562 217 B1

(12) **EUROPEAN PATENT SPECIFICATION**

(45) Date of publication and mention of the grant of the patent:
**10.05.2017 Bulletin 2017/19**

(21) Application number: **11771847.8**

(22) Date of filing: **30.03.2011**

(51) Int Cl.:
***C08L 69/00*** *(2006.01)* ***C08K 5/42*** *(2006.01)*

(86) International application number:
**PCT/JP2011/058041**

(87) International publication number:
**WO 2011/132510 (27.10.2011 Gazette 2011/43)**

(54) **TRANSPARENT, FIRE-RETARDANT AROMATIC POLYCARBONATE RESIN COMPOSITION AND MOLDED PRODUCT**

TRANSPARENTE UND FEUERFESTE AROMATISCHE POLYCARBONATHARZZUSAMMENSETZUNG UND FORMPRODUKT DARAUS

COMPOSITION DE RÉSINE TRANSPARENTE IGNIFUGE DE POLYCARBONATE AROMATIQUE ET PRODUIT MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2010 JP 2010097323**
**20.04.2010 JP 2010097322**

(43) Date of publication of application:
**27.02.2013 Bulletin 2013/09**

(73) Proprietor: **Mitsubishi Gas Chemical Company, Inc.**
**Tokyo 100-8324 (JP)**

(72) Inventor: **TAJIMA Jun**
**Kamisu-shi**
**Ibaraki 314-0102 (JP)**

(74) Representative: **Raynor, Stuart Andrew**
**J A Kemp**
**14 South Square**
**Gray's Inn**
**London WC1R 5JJ (GB)**

(56) References cited:
**JP-A- 11 323 118**
**JP-A- 2001 026 704**
**JP-A- 2005 206 698**
**JP-A- 2008 297 424**
**JP-A- 2009 197 130**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 562 217 B1

## Description

### TECHNICAL FIELD

The present invention relates to a transparent and flame-retardant aromatic polycarbonate resin composite, and, a molded article obtained by using the transparent and flame-retardant aromatic polycarbonate resin composite as a source material.

### BACKGROUND ART

Polycarbonate resin is excellent in heat resistance, mechanical characteristics and electrical characteristics, and has widely been used, for example, in automotive materials, materials of electric/electronic instruments, materials for various home electric appliances, housing materials, and materials for manufacturing parts and components in other industrial fields. In particular, a flame retardant polycarbonate resin composite is preferably used as components of office automation and information appliances such as a computer, a notebook-sized personal computer, a mobile phone, a printer and a copying machine.

In the past, the polycarbonate resin has been given flame resistance through addition of a halogen-containing flame retardant or a phosphorus-containing flame retardant into the polycarbonate resin. The polycarbonate resin composite added with the halogen-containing flame retardant containing chlorine or bromine may, however, be degraded in thermal stability, or may corrode a screw of a molding machine or molding dies used in a molding method. On the other hand, the polycarbonate resin composite added with the phosphorus-containing flame retardant may be suppressed in its intrinsic high transparency, or may be degraded in impact resistance and heat resistance, and may therefore be limited in applications. Moreover, since the halogen-containing flame retardant and the phosphorus-containing flame retardant may cause environmental pollution when molded articles obtained from the polycarbonate resin composite are disposed or recovered, in recent years, there has been a need for flame resistance achievable without using these flame retardants.

### PRIOR ART DOCUMENTS

Patent Documents

Patent Document 1: JPA-H02-251561
Patent Document 2: JPA-H09-59505
Patent Document 3: JPA-H11-323118

### SUMMARY OF THE INVENTION

### PROBLEMS TO BE SOLVED BY THE INVENTION

A flame-retardant polycarbonate resin composite composed of two species of polycarbonate resins and a flame retardant has been well-known as described in JPA-H02-251561, JPA-H09-59505 and JPA-H11-323118. However, the flame-retardant polycarbonate resin composites disclosed in these Laid-Open patent publications have been suffering from insufficient flame resistance and transparency of the resultant molded articles, due to a viscosity-average molecular weight of the polycarbonates used as large as 100000 or larger, and due to an addition ratio of the flame retardant used as much as 0.1 parts by weight or more.

It is therefore an object of the present invention to provide a flame-retardant aromatic polycarbonate resin composite with high transparency, and a molded article obtained by using the aromatic polycarbonate resin composite as a source material.

### MEANS FOR SOLVING THE PROBLEMS

A transparent and flame-retardant aromatic polycarbonate resin composite according to a first aspect of the present invention (which may be referred to as "polycarbonate resin composite of the first aspect of the present invention" hereinafter), for achieving the above object, includes:

(A) 100 parts by mass of a transparent aromatic polycarbonate resin composed of 99 percent by mass to 50 percent

by mass of an aromatic polycarbonate resin-A with a viscosity-average molecular weight (Mv) of $3x10^3$ to $2.5x10^4$, and 1 percent by mass to 50 percent by mass of an aromatic polycarbonate resin-B with a viscosity-average molecular weight (Mv) of $5x10^4$ to $9x10^4$, and,
(B) $5x10^{-3}$ parts by mass to $9x10^{-2}$ parts by mass of a flame retardant composed of an alkali metal salt of an organic sulfonic acid,

wherein the transparent and flame-retardant aromatic polycarbonate resin composite shows a Q-value of 0.1 $cm^3$/sec or smaller, the Q-value being the amount of molten resin flowing out from an orifice of 1 mm in diameter and 10 mm in length of a Koka flow tester, at 280°C under a load of $1.57x10^7$ Pa,
a test piece for UL testing of 2.0 mm thickness molded using the aromatic polycarbonate resin composite satisfies UL94V-0, and,
a platy molded article of 3.0 mm thickness molded using the aromatic polycarbonate resin composite shows a haze value of 2% or smaller.

In the polycarbonate resin composite of the first aspect of the present invention, assuming now that the mass percentage of the aromatic polycarbonate resin-A as $\alpha$, the mass percentage $\beta$ of the aromatic polycarbonate resin-B is given by (100-$\alpha$). While $\alpha$ is preferably $50\leq\alpha\leq99$, it is preferably $55\leq\alpha\leq95$, and more preferably $60\leq\alpha\leq90$. While the amount of addition, expressed in part by mass, of the flame retardant is $5x10^{-3}$ parts by mass to $9x10^{-2}$ parts by mass as described in the above, it is preferably $1x10^{-2}$ parts by mass to $9x10^{-2}$ parts by mass, and more preferably $3xl0^{-2}$ parts by mass to $8.5x10^{-2}$ parts by mass. While the Q-value is 0.1 $cm^3$/sec or smaller as described in the above, it preferably satisfies 0.001 $m^3$/sec or larger and 0.1 $cm^3$/sec or smaller, and more preferably satisfies 0.01 $cm^3$/sec or larger and 0.09 $cm^3$/sec or smaller. While the platy molded article of 3.0 mm thickness obtained by using the aromatic polycarbonate resin composite shows a haze value of 2% or smaller as described in the above, the haze value is preferably 1.5% or smaller, and more preferably 1.0% or smaller.

In the polycarbonate resin composite of the first aspect of the present invention, the viscosity-average molecular weight (Mv) of the aromatic polycarbonate resin-B is preferably $5x10^4$ to $7x10^4$.

A transparent and flame-retardant aromatic polycarbonate resin composite according to a second aspect of the present invention (which may be referred to as "polycarbonate resin composite of the second aspect of the present invention", hereinafter), for achieving the above object, includes:

(A) 100 parts by mass of a transparent aromatic polycarbonate resin composed of 99 percent by mass to 50 percent by mass of an aromatic polycarbonate resin-A with a viscosity-average molecular weight (Mv) of $3x10^3$ to $2.5x10^4$, and 1 percent by mass to 50 percent by mass of an aromatic polycarbonate resin-B with a viscosity-average molecular weight (Mv) of $5x10^4$ to $9xl0^4$, and,
(B) $5x10^{-3}$ parts by mass to $9x10^{-2}$ parts by mass of a flame retardant composed of an alkali metal salt of an organic sulfonic acid,

wherein the aromatic polycarbonate resin-B is composed of a copolymerized polycarbonate resin composed of 99.9 percent by mass to 90 percent by mass of 2,2-bis(4-hydroxyphenyl)propane [=bisphenol A], and 0.1 percent by mass to 10 percent by mass of a component represented by the formula [1] below,
a test piece for UL testing of 2.0 mm thickness molded using the aromatic polycarbonate resin composite satisfies UL94V-0, and,
a platy molded article of 3.0 mm thickness molded using the aromatic polycarbonate resin composite shows a haze value of 2% or smaller.

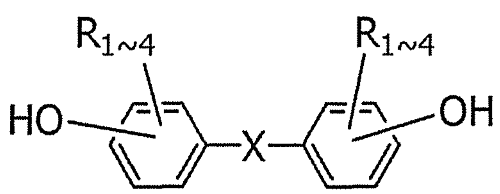
[ 1 ]

In the formula [1], each of $R_1$ to $R_4$ independently represents hydrogen atom, fluorine atom, chlorine atom, bromine atom, iodine atom, $C_{1-9}$ alkyl group, $C_{1-5}$ alkoxy group, $C_{6-12}$ aryl group, $C_{2-5}$ alkenyl group or $C_{7-17}$ aralkyl group, each of the groups may have a substituent, and the substituent possibly bound to a carbon atom in any of these groups is a $C_{1-5}$ alkyl group, $C_{2-5}$ alkenyl group or $C_{1-5}$ alkoxy group.

X represents:

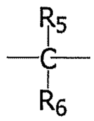 ,

-S- , $-(CH_2)a-$, -O- , -SO- , -CO- , $-SO_2-$

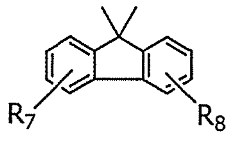 , 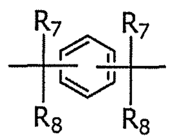 or 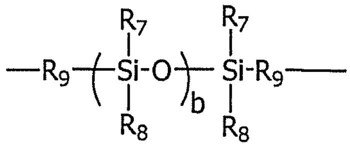

where each of $R_5$ and $R_6$ independently represents hydrogen atom, fluorine atom, chlorine atom, bromine atom, iodine atom, $C_{1-9}$ alkyl group, $C_{1-5}$ alkoxy group, $C_{6-12}$ aryl group, $C_{2-5}$ alkenyl group or $C_{7-17}$ aralkyl group, each of the groups may have a substituent; or, $R_5$ and $R_6$ may be groups which combine together to form a carbocycle or heterocycle, and the substituent possibly bound to a carbon atom in any of these groups is a $C_{1-5}$ alkyl group, $C_{1-5}$ alkoxy group, $C_{2-5}$ alkenyl group, fluorine atom, chlorine atom, bromine atom or iodine atom; each of $R_7$ and $R_8$ independently represents hydrogen atom, fluorine atom, chlorine atom, bromine atom, iodine atom, $C_{1-9}$ alkyl group, $C_{1-5}$ alkoxy group or $C_{6-12}$ aryl group, each of the groups may have a substituent, and the substituent possibly bound to a carbon atom in any of these groups is a $C_{1-5}$ alkyl group, $C_{1-5}$ alkoxy group, fluorine, chlorine, bromine or iodine; and $R_9$ is a $C_{1-9}$ alkylene group which may have a substituent; "a" represents an integer from 0 to 20, and "b" represents an integer from 1 to 500.

In the polycarbonate resin composite of the second aspect of the present invention, assuming now that the mass percentage of the aromatic polycarbonate resin-A as $\alpha$, the mass percentage $\beta$ of the aromatic polycarbonate resin-B is given by ($100-\alpha$). While $\alpha$ is preferably $50\leq\alpha\leq99$, it is preferably $55\leq\alpha\leq95$, and more preferably $60\leq\alpha\leq90$. While the platy molded article of 3.0 mm thickness obtained by using the aromatic polycarbonate resin composite shows a haze value of 2% or smaller as described in the above, the haze value is preferably 1.5% or smaller, and more preferably 1.0% or smaller. In the aromatic polycarbonate resin-B, assuming now that the mass percentage of 2,2-bis(4-hydroxyphenyl)propane as $\gamma$, the mass percentage 5 of the component represented by the formula [1] is given by ($100-\gamma$). While $\gamma$ is $90\leq\gamma\leq99.9$ as described in the above, it is more preferably $95\leq\gamma\leq99.5$.

Also in the polycarbonate resin composite of the second aspect of the present invention, the aromatic polycarbonate resin-B preferably has a viscosity-average molecular weight (Mv) of $5x10^4$ to $7x10^4$.

In the polycarbonate resin composite of the second aspect of the present invention including the preferred embodiments described in the above, specific examples of the component represented by the formula [1] include 1,1'-biphenyl-4,4'-diol, bis(4-hydroxyphenyl)methane, 1,1-bis(4-hydroxyphenyl)ethane, bis(4-hydroxyphenyl)ether, bis(4-hydroxyphenyl)sulfoxide, bis(4-hydroxyphenyl)sulfide, bis(4-hydroxyphenyl)sulfone, bis(4-hydroxyphenyl)ketone, 2,2-bis(4-hydroxy-3-tert-butylphenyl)propane, 2,2-bis(4-hydroxy-3-methylphenyl)propane [=bisphenol C], 1,1-bis(4-hydroxyphenyl)cyclopentane, 1,1-bis(4-hydroxyphenyl)cyclohexane [=bisphenol Z], 2,2-bis(4-hydroxyphenyl)hexafluoropropane, bis(4-hydroxyphenyl)diphenylmethane, 1,1-bis(4-hydroxyphenyl)-1-phenylethane, 9,9-bis(4-hydroxyphenyl)fluorene, 9,9-bis(4-hydroxy-3-methylphenyl)fluorene, $\alpha,\omega$-bis [2-(*p*-hydroxyphenyl)ethyl]polydimethylsiloxane, $\alpha,\omega$-bis [3-(o-hydroxyphenyl)propyl]polydimethylsiloxane, and 4,4'-[1,3-phenylenebis(1-methylethylidene)]bisphenol. Among them, bis(4-hydroxyphenyl)ether, 2,2-bis(4-hydroxy-3-methylphenyl)propane [=bisphenol C], 1,1-bis(4-hydroxyphenyl)cyclohexane [=bisphenol Z] and 1,1-bis(4-hydroxyphenyl)-1-phenylethane are preferable; and 1,1-bis(4-hydroxyphenyl)cyclohexane [=bisphenol Z] is more preferable.

The polycarbonate resin composite of the first aspect or the second of the present invention, including the preferred embodiments described in the above, may be configured to contain at least one species of additives selected from the group consisting of a thermal stabilizer, an antioxidant, a UV absorber, a mold releasing agent and a colorant. An antistatic agent, a fluorescent brightener, an anticlouding agent, a fluidity modifier, a plasticizer, a dispersion aid, an antibacterial agent or the like may be added, without considerably degrading desired characteristics.

The thermal stabilizer may be exemplified by those of phenol-containing, phosphorus-containing and sulfur-containing ones. Specific examples include phosph-oxoacids such as phosphoric acid, phosphonic acid, phosphorous acid, phosphinic acid, polyphosphorus acid and the like; metal salts of pyrophosphate acid such as sodium pyrophosphate, potassium pyrophosphate, calcium pyrophosphate and the like; phosphates of Group I or Group X metals such as potassium phosphate, sodium phosphate, cesium phosphate, zinc phosphate and the like; organophosphate compound, organophosphite compound, organophosphonite compound and the like. Alternatively, at least one species selected from the group consisting of phosphorous ester compound (a) having at least one ester in the molecule esterified by phenol and/or phenol having at least one $C_{1-25}$ alkyl group; phosphorous acid (b); and tetrakis(2,4-di-tert-butylphenyl)-4,4'-biphenylene-diphosphonite (c). Specific examples of the phosphorous ester compound (a) include trioctyl phosphite, trioctadecyl phosphite, tridecyl phosphite, trilauryl phosphite, tristearyl phosphite, triphenyl phosphite, tris(monononylphenyl)phosphite, tris(monononyl/dinonylphenyl)phosphite, trisnonylphenyl phosphite, tris(octylphenyl)phosphite, tris(2,4-di-*tert*-butylphenyl)phosphite, trinonyl phosphite, didecylmonophenyl phosphite, dioctylmonophenyl phosphite, diisopropylmonophenyl phosphite, monobutyldiphenyl phosphite, monodecyldiphenyl phosphite, bis(2,4-di-tert-butylphenyl)pentaerythritol phosphite, bis(2,6-di-tert-butyl-4-methylphenyl)pentaerythritol phosphite, monooctyldiphenyl phosphite, distearylpentaerythritol diphosphite, tricyclohexyl phosphite, diphenylpentaerythritol diphosphite, bis(2,6-di-*tert*-butyl-4-methylphenyl)pentaerythritol diphosphite, 2,2-methylenebis(4,6-di-*tert*-butylphenyl)octyl phosphite, bis(nonylphenyl)pentaerythritol diphosphite, bis(2,4-di-*tert*-butylphenyl)pentaerythritol diphosphite, and bis(2,6-di-*tert*-butyl-4-ethylphenyl)pentaerythritol diphosphite. A single species of these compounds may be used alone, or two or more species may be used in a combined manner.

Specific examples of the organophosphite compound include "Adekastab 1178", "Adekastab 2112" and "Adekastab HP-10" (trade names, the same will apply hereinafter) from ADEKA Corporation; "JP-351", "JP-360" and "JP-3CP" from Johoku Chemical Co. Ltd.; and "Irgafos 168" from Ciba Japan K.K.

Examples of phosphoric ester include trimethyl phosphate, triethxyl phosphate, tributyl phosphate, trioctyl phosphate, triphenyl phosphate, tricresyl phosphate, tris(nonylphenyl)phosphate, and 2-ethylphenyldiphenyl phosphate.

An addition ratio of the thermal stabilizer, per 100 parts by mass of polycarbonate resin, is 0.001 parts by mass or more, preferably 0.01 parts by mass or more, and still more preferably 0.03 parts by mass or more, on the other hand, 1 part by mass or less, preferably 0.7 parts by mass or less, and more preferably 0.5 parts by mass or less. The thermal stabilization effect may be insufficient if the content of the thermal stabilizer is too small, whereas the effect may saturate, and may thereby degrade the economy if the content of the thermal stabilizer is too much.

The antioxidant is exemplified by phenol-based antioxidant, hindered phenol-based antioxidant, bisphenol-based antioxidant and polyphenol-based antioxidant. More specifically, the antioxidant is exemplified by 2,6-di-*tert*-butyl-4-methylphenol, tris(3,5-di-*tert*-butyl-4-hydroxybenzyl)isocyanurate, n-octadecyl-3-(3',5'-di-*tert*-butyl-4'-hydroxyphenyl)propionate, tetrakis [methylene-3-(3,5-di-*tert*-butyl-4-hydroxyphenyl)propionate]methane, 4,4'-butylidenebis(3-methyl-6-*tert*-butylphenol), triethylene glycol-bis [3-(3-*tert*-butyl-4-hydroxy-5-methylphenyl)propionate], 3,9-bis{2-[3-(3-*tert*-butyl-4-hydroxy-5-methylphenyl)propionyloxy]-1,1-dimethylethyl}-2,4,8,10-tetraoxaspiro[5,5]undecane, pentaerythritoltetrakis [3-(3,5-di-*tert*-butyl-4-hydroxyphenyl)propionate], thiodiethylenebis [3-(3,5-di-*tert*-butyl-4-hydroxyphenyl)propionate], N,N'-hexane-1,6-diylbis [3-(3,5-di-*tert*-butyl-4-hydroxyphenylpropionamide), 2,4-dimethyl-6-(1-methylpentadecyl)phenol, diethyl [[3,5-bis(1,1-dimethylethyl)-4-hydroxyphenyl]methyl]phosphate, 3,3',3",5,5',5"-hexa-*tert*-butyl-a,a',a"-(mesitylene-2,4,6-triyl)tri-*p*-cresol, 4,6-bis(octylthiomethyl)-o-cresol, ethylenebis(oxyethylene)bis [3-(5-*tert*-butyl-4-hydroxy-*m*-tolyl)propionate], hexamethylenebis [3-(3,5-di-*tert*-butyl-4-hydroxyphenyl)propionate], 1,3,5-tris(3,5-di-*tert*-butyl-4-hydroxybenzyl)-1,3,5-triazine-2,4,6(1H,3H,5H)-trione, and 2,6-di-*tert*-butyl-4-(4,6-bis(octylthio)-1,3,5-triazine-2-ylamino)phenol. Specific examples of the phenol-based antioxidant include "Irganox 1010" (registered trademark, the same will apply hereinafter), "Irganox 1076" from Ciba Japan K.K., "Adekastab AO-50" and "Adekastab AO-60" from ADEKA Corporation.

An addition ratio of the antioxidant per 100 parts by mass of polycarbonate resin is 0.001 parts by mass or more, and preferably 0.01 parts by mass or more, on the other hand, 1 part by mass or less, and preferably 0.5 parts by mass or less. The effect of antioxidant may be insufficient if the addition ratio of the antioxidant is below the lower limit value, whereas the effect may be saturated, and may thereby degrade the economy if the addition ratio of the antioxidant exceeds the upper limit value.

Examples of the UV absorber include inorganic UV absorbers such as cerium oxide and zinc oxide; and organic UV absorbers such as benzotriazole compound, benzophenone compound, salicylate compound, cyanoacrylate compound, triazine compound, oxanilide compound, malonic ester compound, hindered amine compound, phenyl salicylate-based compound and the like. Among them, benzotriazole-based and benzophenone-based organic UV absorbers are preferable. In particular, specific examples of the benzotriazole compound include 2-(2'-hydroxy-5'-methylphenyl)benzotriazole, 2-[2'-hydroxy-3',5'-bis($\alpha$,$\alpha$-dimethylbenzyl)phenyl]-benzotriazole, 2-(2'-hydroxy-3',5'-di-*tert*-butyl-phenyl)-benzotriazole, 2-(2'-hydroxy-3'-*tert*-butyl-5'-methylphenyl)-5-chlorobenzotriazole, 2-(2'-hydroxy-3',5'-di-*tert*-butylphenyl)-5-chlorobenzotriazole), 2-(2'-hydroxy-3',5'-di-*tert*-amyl)-benzotriazole, 2-(2'-hydroxy-5'-*tert*-octylphenyl)benzotriazole, 2,2'-methylenebis [4-(1,1,3,3-tetramethylbutyl)-6-(2N-benzotriazole-2-yl)phenol], 2-(4,6-diphenyl-1,3,5-triazine-2-yl)-5-[(hexyl)oxy]-phenol, 2-[4,6-bis(2,4-dimethylphenyl)-1,3,5-triazine-2-yl]-5-(octyloxy)phenol, 2,2'-(1,4-phenylene)bis [4H-3,1-benzoxadine-4-one], [(4-methoxyphenyl)-methylene]-propanedioic acid-dimethylester, 2-(2H-benzotriazole-2-yl)-*p*-cresol, 2-(2H-benzotriazole-2-yl)-4,6-bis(1-methyl-1-phenylmethyl)phenol, 2-[5-chloro (2H)-benzotriazole-2-yl]-4-methyl-6-(*tert*-butyl)phenol, 2,4-di-*tert*-butyl-6-(5-chlorobenzotriazole-2-yl)phenol, 2-(2H-benzotriazole-2-yl)-4-(1,1,3,3-tetrabutyl)phenol, 2,2'-methylenebis [6-(2H-benzotriazole-2-yl)-4-(1,1,3,3-tetrabutyl)phenol], [methyl-3-[3-*tert*-butyl-5-(2H-benzotriazole-2-yl)-4-hydroxyphenyl]propionate-polyethylene glycol] condensate and the like. Two or more species of these compounds may be used in a combined manner. Among them, preferable examples include 2-(2'-hydroxy-5'-*tert*-octylphenyl)benzotriazole, 2,2'-methylene-bis [4-(1,1,3,3-tetramethylbutyl)-6-(2N-benzotriazole 2-yl)phenol] and the like. Specific examples of the benzophenone-based UV absorber include 2,4-dihydroxy-benzophenone, 2-hydroxy-4-methoxy-benzophenone, 2-hydroxy-4-*n*-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, 2,2',4,4'-tetrahydroxy-benzophenone and the like. Specific examples of the phenyl salicylate-based UV absorber include phenyl salicylate, 4-*tert*-butyl-phenyl salicylate and the like. In addition, specific examples of the triazine-based UV absorber include 2-(4,6-diphenyl-l,3,5-triazine-2_yl)-5-[(hexyl)oxy]-phenol, 2-[4,6-bis(2,4-dimethylphenyl)-1,3,5-triazine-2-yl]-5-(octyloxy)phenol and the like. Specific examples of the hindered amine-based UV absorber include bis(2,2,6,6-tetramethylpiperidine-4-yl)sebacate and the like.

An addition ratio of the UV absorber per 100 parts by mass of polycarbonate resin is 0.01 parts by mass or more and preferably 0.1 parts by mass or more, on the other hand, 3 parts by mass or less, and preferably 1 part by mass or less. An effect of improving the weather resistance may be insufficient if the addition ratio of the UV absorber is below the lower limit value, and a mold deposit may occur to pollute the dies if the addition ratio of the UV absorber exceeds the upper limit value.

The mold releasing agent is exemplified by carboxylic ester, polysiloxane compound, paraffin wax (polyolefin-based) and the like. More specifically, exemplified is at least one species of compound selected from the group consisting of aliphatic carboxylic acid, ester formed by aliphatic carboxylic acid and alcohol, aliphatic hydrocarbon compound with a number average molecular weight of 200 to 15000, and polysiloxane-based silicone oil. The aliphatic carboxylic acid is exemplified by saturated or unsaturated, monovalent, divalent or trivalent aliphatic carboxylic acids. The aliphatic carboxylic acid herein also includes alicyclic carboxylic acid. Among them, $C_{6-36}$ monovalent or divalent carboxylic acids are preferable as the aliphatic carboxylic acid; and $C_{6-36}$ aliphatic saturated monovalent carboxylic acid is more preferable. Specific examples of the aliphatic carboxylic acid include palmitic acid, stearic acid, valeric acid, caproic acid, capric acid, lauric acid, arachic acid, behenic aicd, lignoceric acid, cerotic acid, mellisic acid, tetratriacontanic acid, montanic acid, glutaric acid, adipic acid, azelaic acid and the like. The aliphatic carboxylic acid composing the ester formed between aliphatic carboxylic acid and alcohol may be same as the above-described aliphatic carboxylic acid. On the other hand, the alcohol is exemplified by saturated or unsaturated, monohydric or polyhydric alcohol. The alcohol may have a substituent such as fluorine atom, aryl group or the like. Among them, $C_{30}$ or shorter, monohydric or polyhydric, saturated alcohol is preferable, and $C_{30}$ or shorter, aliphatic, saturated, monohydric alcohol or polyhydric alcohol is more preferable. The aliphatic alcohol herein also includes alicyclic compound. Specific examples of the alcohol include octanol, decanol, dodecanol, stearyl alcohol, behenyl alcohol, ethylene glycol, diethylene glycol, glycerin, pentaerythritol, 2,2-dihydroxy-perfluoropropanol, neopentylene glycol, ditrimethylolpropane, dipentaerythritol and the like. The ester compound may contain aliphatic carboxylic acid and/or alcohol as an impurity, or may be a mixture of a plurality of compounds. Specific examples of the ester formed between aliphatic carboxylic acid and alcohol include beeswax (mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate and the like. Examples of the aliphatic hydrocarbon having a number-average molecular weight of 200 to 15000 include liquid paraffin, paraffin wax, micro wax, polyethylene wax, Fischer-Tropsch wax, $C_{3-12}$ $\alpha$-olefin oligomer and the like. The aliphatic hydrocarbon herein also includes alicyclic hydrocarbon. These hydrocarbon compounds may partially be oxidized. Among them, partially oxidized products of paraffin wax, polyethylene wax and polyethylene wax are preferable; and paraffin wax and polyethylene wax are more preferable. The number-average molecular weight is preferably 200 to 5000. The aliphatic hydrocarbons may be a single substance, or may be a mixture of various species having a variety of constituents and molecular weight, provided that the major constituent falls in the above-described ranges. The polysiloxane-based silicone oil is exemplified by dimethyl silicone oil, phenyl methyl silicone oil, diphenyl silicone oil, fluorinated alkyl silicone and the like. Two or more species of them may be used in a combined manner. An addition ratio of the mold releasing agent per 100 parts by mass of polycarbonate resin is preferably 0.001 parts by mass or more, more preferably 0.01 parts by mass or more, on the other hand, 2 parts by mass or less, and more preferably 1 part by mass or less. The mold releasing effect may be insufficient if the addition ratio of the mold releasing agent is below the lower limit value, whereas the hydrolytic resistance may degrade, and injection molding dies may be polluted if the addition ratio of the mold releasing agent exceeds the upper limit value.

Examples of pigment and dye used as a colorant include inorganic pigment, organic pigment, organic dye and the like. Examples of the inorganic pigment include carbon black; sulfide-based pigments such as cadmium red, cadmium yellow and the like; silicate-based pigments such as ultramarine and the like; oxide-based pigments such as titanium oxide, zinc oxide, red iron oxide, chromium oxide, iron black, titanium yellow, zinc-iron-based brown, titanium cobalt-based green, cobalt green, cobalt blue, copper-chromium-based black, copper-iron-based black and the like; chromate-based pigments such as chrome yellow, molybdate orange and the like; and ferrocyanide-based pigments such as prussian blue and the like. Examples of the organic pigment and organic dye used as a colorant include phthalocyanine-based dye and pigment such as copper phthalocyanine blue, copper phthalocyanine green and the like; azo-based dye and pigment such as nickel azo yellow and the like; condensed polycyclic dye and pigment such as thioindigo-based,

perinone-based, perylene-based, quinacridone-based, dioxazine-based, isoindolinone-based, quinophthalone-based compounds and the like; and quinoline-based, anthraquinone-based, heterocyclic, methyl-based pigments and dyes, and the like. Among them, titanium oxide, carbon black, cyanine-based, quinoline-based, anthraquinone-based, phthalocyanine-based dyes and pigments are preferable, from the viewpoint of thermal stability. The dyes and pigments contained herein may be a single species, or an arbitrary combination of two or more species according to an arbitrary ratio of mixing. For the purpose of improving handling properties during extrusion and dispersibility into the resin composition, the dye and pigment may preliminarily be mixed with polystyrene-based resin, polycarbonate-based resin or acryl-based resin to form a master batch. An addition ratio of the colorant per 100 parts by mass of polycarbonate resin is 5 parts by mass or less, more preferably 3 parts by mass or less, and still more preferably 2 parts by mass or less. The impact resistance may be insufficient if the addition ratio of the colorant is too much.

The aromatic polycarbonate resin-A and the aromatic polycarbonate resin-B in the polycarbonate resin composite of the present invention may be synthesized by any of a variety of well-known methods, including an interfacial polymerization method, a pyridine method, an ester interchange method, and a ring-opening polymerization method of cyclic carbonate compound. More specifically, they are polymer or copolymers of thermoplastic aromatic polycarbonate which may have a straight-chain form or may be branched, obtained by allowing an aromatic dihydroxy compound, optionally containing a small amount of polyhydroxy compound, to react with a carbonyl-based compound such as carbonyl chloride, generally known as phosgene, or, diester carbonate represented by dimethyl carbonate and diphenyl carbonate, or a carbonyl-based compound such as carbon monoxide and carbon dioxide.

Examples of the aromatic dihydroxy compound used as a source include 1,1'-biphenyl-4,4'-diol, bis(4-hydroxyphenyl)methane, 1,1-bis(4-hydroxyphenyl)ethane, bis(4-hydroxyphenyl)ether, bis(4-hydroxyphenyl)sulfoxide, bis(4-hydroxyphenyl)sulfide, bis(4-hydroxyphenyl)sulfone, bis(4-hydroxyphenyl)ketone, 2,2-bis(4-hydroxyphenyl)propane [=bisphenol A], 2,2-bis(4-hydroxy-3-*tert*-butylphenyl)propane, 2,2-bis(4-hydroxy-3-methylphenyl)propane [=bisphenol C], 1,1-bis(4-hydroxyphenyl)cyclopentane, 1,1-bis(4-hydroxyphenyl)cyclohexane [=bisphenol Z], 2,2-bis(4-hydroxyphenyl)hexafluoropropane, bis(4-hydroxyphenyl)diphenylmethane, 1,1-bis(4-hydroxyphenyl)-1-phenylethane, 9,9-bis(4-hydroxyphenyl)fluorene, 9,9-bis(4-hydroxy-3-methylphenyl)fluorene, $\alpha,\omega$-bis [2-(p-hydroxyphenyl)ethyl]polydimethylsiloxane, $\alpha,\omega$-bis [3-(o-hydroxyphenyl)propyl]polydimethylsiloxane, 4,4'-[1,3-phenylenebis(1-methylethylidene)]bisphenol and the like, wherein bis(4-hydroxyphenyl)alkanes are preferable; and 2,2-bis(4-hydroxyphenyl)propane [bisphenol A] and 1,1-bis(4-hydroxyphenyl)cyclohexane [bisphenol Z] are particularly preferable. A single species of these aromatic dihydroxy compounds may be used alone, or two or more species may be used in a combined manner. As a part of the dihydroxy compound, a compound having one or more tetraalkylphosphonium sulfonate bound to the above-mentioned aromatic dihydroxy compound, or, polymer or oligomer having a siloxane structure with phenolic hydroxy groups bound to both terminals, may be used in a combined manner.

In order to obtain the branched polycarbonate resin, it suffices to use a polyhydroxy compound represented by phloroglucin, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene, 1,1,1-tris(4-hydroxyphenyl)ethane and the like; or, 3,3-bis(4-hydroxyaryl)oxyindole (=isatin bisphenol), 5-chloroisatin bisphenol, 5,7-dichloroisatin bisphenol, 5-bromoisatin bisphenol and the like, as a part of the above-described aromatic dihydroxy compound, wherein the amount of use is 0.01 mol% to 10 mol%, and preferably 0.1 mol% to 3 mol%.

In the reaction of the interfacial polymerization method, the polycarbonate resin may be obtained under the presence of an inert organic solvent or an aqueous alkali solution, while generally keeping pH at 10 or above, by allowing an aromatic dihydroxy compound, together with a molecular weight modifier (terminator) and an optionally-added antioxidant for preventing oxidation of the aromatic dihydroxy compound, to react with phosgene, and then, by adding a polymerization catalyst such as tertiary amine or quaternary ammonium salt, so as to proceed interfacial polymerization. The time the molecular weight modifier is added is not specifically limited so long as the time falls between the phosgenation and the start of polymerization reaction. The reaction temperature is 0°C to 35°C, and the reaction time is several minutes to several hours.

Examples of the inert organic solvent include chlorinated hydrocarbons such as dichloromethane, 1,2-dichloroethane, chloroform, monochlorobenzene dichlorobenzene and the like; and aromatic hydrocarbons such as benzene, toluene, xylene and the like. Examples of the molecular weight modifier or terminator include compounds having a monohydric phenolic hydroxy group, such as *m*-methylphenol, p-methylphenol, *m*-propylphenol, *p*-propylphenol, *p-tert*-butylphenol, phenol substituted at the para position by a long chain alkyl group, and the like. Examples of the polymerization catalyst include tertiary amines such as trimethylamine, triethylamine, tributylamine, tripropylaime, trihexylamine, pyridine and the like; and quaternary ammonium salts such as trimethylbenzylammonium chloride, tetramethylammonium chloride, triethylbenzylammonium chloride and the like.

The reaction based on the ester interchange method proceeds between the diester carbonate and the aromatic dihydroxy compound. Desired levels of molecular weight and terminal hydroxy group content of the polycarbonate resin are determined generally by appropriately adjusting the ratio of mixing of the diester carbonate and the aromatic dihydroxy compound, or by appropriately adjusting the degree of decompression during the reaction. Since the terminal hydroxy

group content largely affects the thermal stability, hydrolytic stability and hue of the polycarbonate resin, the terminal hydroxy group content is preferably 1000 ppm or less, and particularly 700 ppm or less, from the viewpoint of achieving practical performances. It is general to use, per 1 mol of aromatic dihydroxy compound, an equimolar amount or more of the diester carbonate, wherein the amount of use is preferably 1.01 mol to 1.30 mol.

For the case where the polycarbonate resin is produced by the ester interchange method, an ester interchange catalyst is generally used. While the ester interchange catalyst used herein is not specifically limited, alkali metal compound and/or alkali earth metal compound are mainly used, optionally with an auxiliary basic compound such as basic boron compound, basic phosphorus compound, basic ammonium compound, amine-based compound and the like. The ester interchange method using the above-described sources may be implemented by melt polycondensation reaction at a temperature of 100°C to 320°C, under a reduced pressure of $2.7x10^2$ Pa (2 mmHg) or lower in the final stage, while a by-product material such as an aromatic hydroxy compound is being removed. While the melt polycondensation reaction may be implemented by either of the batch scheme and the continuous scheme, the continuous scheme is preferably adopted, taking the stability of the polycarbonate resin composite of the present invention into account. In the ester interchange method, it is preferable to use a catalyst deactivator which neutralizes the catalyst, such as sulfur-containing acidic compound and derivatives thereof. Amount of use of the catalyst deactivator is generally 0.5 to 10 equivalents, and preferably 1 to 5 equivalents, relative to the alkali metal contained in the catalyst, and generally 1 ppm to 100 ppm, and preferably 1 ppm to 20 ppm, relative to the polycarbonate resin.

Flake of the polycarbonate resin composite may be obtained typically by dropping a methylene chloride solution, which contains the polycarbonate resin composite obtained by the interfacial polymerization method, into warm water kept at 45°C, followed by removing the solvent by evaporation; or alternatively by pouring the methylene chloride solution, which contains the polycarbonate resin composite obtained by the interfacial polymerization method, into methanol, followed by collection of the deposited polymer by filtration and drying; or still alternatively by stirring the methylene chloride solution, which contains the polycarbonate resin composite obtained by the interfacial polymerization method, in a kneader, and crushing the product in the kneader while keeping the solution at 40°C, followed by removing the solvent using hot water of 95°C or above.

The obtained polycarbonate resin composite may be isolated, necessary, by any of well-known methods, and then may be pelletized typically by a cold cutting method based on a well-known strand method (the polycarbonate resin composite once melted is formed into strand, cooled, and then cut into a predetermined form for pelletizing), a hot cutting method based on an in-air hot cutting method (the polycarbonate resin composite once melted is cut into pellets in the air, before being brought into contact with water), or a hot cutting method based on an underwater cold cutting method (the polycarbonate resin composite once melted is cut under water and concomitantly cooled, to produce pellets). The obtained pellets of the polycarbonate resin composite are preferably dried, as required, by a method using a hot air drying oven, vacuum drying oven or dehumidifying oven.

Examples of the flame retardant composed of an alkali metal salt of an organic sulfonic acid include metal salt of aliphatic sulfonate, metal salt of aromatic sulfonate and the like. A single species of these flame retardants may be used alone, or two or more species may be used in a combined manner. Examples of the alkali metal include sodium, lithium, potassium, rubidium and cesium. The aliphatic sulfonate is exemplified preferably by metal salt of fluoroalkane sulfonate, and more preferably by metal salt of perfluoroalkane sulfonate. The metal salt of fluoroalkane sulfonate is exemplified preferably by alkali metal salt, and more preferably by alkali metal salt of $C_{4-8}$ fluoroalkane sulfonic acid. Specific examples of the metal salt of fluoroalkane sulfonate include sodium perfluorobutanesulfonate, potassium perfluorobutanesulfonate, sodium perfluoromethylbutanesulfonate, potassium perfluoromethylbutanesulfonate, sodium perfluorooctanesulfonate, potassium perfluorooctanesulfonate and the like. The metal salt of aromatic sulfonate is exemplified by alkali metal salt. Specific examples of the alkali metal salt of aromatic sulfonate include sodium 3,4-dichlorobenzenesulfonate, sodium 2,4,5-trichlorobenzenesulfonate, sodium benzenesulfonate, sodium diphenylsulfone-3-sulfonate, potassium diphenylsulfone-3-sulfonate, sodium 4,4'-dibromodiphenyl-sulfone-3-sulfonate, potassium 4,4'-dibromophenyl-sulfone-3-sulfonate, disodium diphenylsulfone-3,3'-disulfonate, dipotassium diphenylsulfone-3,3'-disulfonate, sodium dodecylbenzene sulfonate, potassium dodecylbenzenesulfonate and the like.

The polycarbonate resin composite of the present invention may also contain resin(s) other than the polycarbonate resin as required, so long as desired various characteristics will not be impaired. Examples of such resins include thermoplastic polyester resins such as polyethylene terephthalate resin (PET resin), polytrimethylene terephthalate (PTT resin), polybutylene terephthalate resin (PBT resin) and the like; styrene-based resins such as polystyrene resin (PS resin), high-impact polystyrene resin (HIPS), acryolonitrile-styrene copolymer (AS resin), methyl methacrylate-styrene copolymer (MS resin) and the like; core/shell-type elastomers such as methyl methacrylate-acrylic rubber-styrene copolymer (MAS)and the like, and elastomer such as polyester-based elastomer and the like; polyolefin resins such as cycloolefin resin (COP resin), cycloolefin (COP) copolymer resin and the like; polyamide resin (PA resin); polyimide resin (PI resin); polyetherimide resin (PEI resin); polyurethane resin (PU resin); polyphenyleneether resin (PPE resin); polyphenylene sulfide resin (PPS resin); polysulfone resin (PSU resin); polymethacrylate resin (PMMA resin); and polycaprolactone.

The molded article of the present invention, for achieving the above object, is the one formed using the aromatic polycarbonate resin composite of the present invention including various preferable embodiments and configurations. Geometry, pattern, color, dimension and so forth of the molded article may arbitrarily be selected depending on applications, without limitation. Examples of the molded article include electric/electronic appliances, office automation appliances, an information terminal apparatus, mechanical components, home appliances, vehicle components, building materials, various containers, goods for leisure-time amusement and sundries, components of lighting equipment, components and parts of various home electric appliances, housings of electric appliances, containers, covers, enclosures, cases, and covers and cases of lighting equipment. Examples of the electric/electronic appliances include display devices used for a personal computer, a game machine, a television set, a liquid crystal display device and a plasma display device; and also include a printer, a copying machine, a scanner, a facsimile, an electronic organizer, a PDA, an electronic desktop calculator, an electronic dictionary, a camera, a video camera, a mobile phone, a battery pack, a drive or reading device of recording media, a mouse, a ten-key, a CD player, an MD player and a portable radio/audio player. The molded article is also exemplified by an electric signboard, a backlight for liquid crystal display device, an illuminated display, a traffic sign, a signboard, a screen, an automobile components such as a reflective plate, meters and so forth, a toy and an ornament.

A method of manufacturing the molded article is arbitrarily selectable from those having been generally adapted to the methods using the polycarbonate resin composite, without special limitation. Examples of the methods include an injection-molding method, an ultrahigh speed injection-molding method, an injection-compression molding method, a two-color formation method, a hollow molding method such as a gas assisted molding method, a molding method using an insulated runner mold, a molding method using a rapid heating die, a foam molding method (including supercritical fluid), an insert molding method, an IMC (in-mold coating) molding method, an extrusion molding method, a sheet molding method, a thermoforming method, a rotational molding method, a laminate molding method, and a press molding method. A molding method using a hot runner system is also adaptable.

The flame resistance of the polycarbonate resin composite is evaluated conforming to UL94 (the Standard for Safety of Flammability of Plastic Materials for Parts in Devices and Appliances Testing) specified by the American Underwriters Laboratories (UL), according to which test pieces for UL testing obtained by the method described later, are conditioned in a thermostat chamber at a temperature of 23°C and a relative humidity of 50% for 48 hours. UL94V specifies a method for evaluating flame resistance of a test piece of a predetermined size, which test piece is held vertically and brought into contact with flame of a burner for 10 seconds, based on afterflame time and dripping tendency. In order to achieve the flame resistance classes V-0, V-1 and V-2, it is necessary to satisfy the criteria shown in Table 1 below.

[TABLE 1]

| | V-0 | V-1 | V-2 |
|---|---|---|---|
| Afterflame time of each test piece | ≤10 sec | ≤30 sec | ≤30 sec |
| Total afterflame time of 5 test pieces | ≤50 sec | ≤250 sec | ≤250 sec |
| Cotton ignition due to drip | No | No | Yes |

The afterflame time herein means length of time over which the test piece keeps flamy combustion even after an ignition source is brought away. Ignition of cotton induced by dripping is determined by an event whether a cotton indicator located approximately 300 mm below the lower edge of the test piece is ignited or not by a drip from the test piece. This will be denoted as "flame resistance" in Table 2 described later.

Viscosity-average molecular weight (Mv) is obtained by allowing a 0.2 g/dl polycarbonate resin solution in dichloromethane to pass through an Ubbelohde viscometer at 20°C, determining the intrinsic viscosity [η] dl/g of the solution using a Huggins constant of 0.45, and by converting the result using the equation below.

$$\eta=1.23\text{x}10^{-4}\ \text{x}\ Mv^{0.83}$$

The Q-value used for evaluating fluidity is obtained by drying the pellets, obtained by the method described later, at 120°C for 4 hours or longer, and by measuring the amount of flow per unit time (unit: x$10^{-2}$ $cm^3$/sec) of the polycarbonate resin composite in a Koka flow tester (high-load-type flow tester) from Shimadzu Corporation at 280°C, under a load of 1.57x$10^7$ Pa (160 kgf/$cm^2$). An orifice of the tester used herein is 1 mm in diameter and 10 mm in length. The value will be denoted as "fluidity" in Table 2 shown later. It is understood that, the larger the Q-value, the better the fluidity of the polycarbonate resin composite.

The haze value used for evaluating transparency is measured conforming to JIS K-7136, "Plastics - Determination of haze for transparent materials", using platy molded articles manufactured by the method described later, and using a haze meter Model NDH-2000 from Nippon Denshoku Industries Co. Ltd. Haze is used as an index for turbidity of resin. The lower the value, the larger the transparency, and is preferable. The value will be denoted as "transparency" in Table 2 shown later, and will be denoted as "transparency (1)" in Table 3 shown later. The haze value is also measured after the test pieces are kept in a hot air oven at 130°C for 300 hours, and, is also measured after the test pieces are kept in a pressure cooker tester (from Hirayama Manufacturing Corporation: HASTEST, MODEL PC-SIII) at 120°C under a pressure of $9.8x10^9$ Pa (1 $kg/cm^2$), in an steam atmosphere with a relative humidity of 100% for 100 hours, and the obtained haze values are used as indices of thermal stability and moist heat stability. In Table 3, the former haze value is denoted as "transparency (2)", and the latter haze value is denoted as "transparency (3) ".

## ADVANTAGEOUS EFFECTS OF THE INVENTION

In the aromatic polycarbonate resin composite of the first aspect of the present invention, since the viscosity-average molecular weight (Mv) of the aromatic polycarbonate resin-B does not exceed $1x10^5$, the molded article is given not only excellent flame resistance, but also a low haze value and high transparency. Since the addition ratio of the flame retardant does not exceed $1x10^{-1}$ parts by mass, the molded article having a low haze value and high transparency may be obtained. In addition, since the Q-value is 0.1 $cm^3$/sec or smaller, UL94V-0 may exactly be satisfied. In the aromatic polycarbonate resin composite of the second aspect of the present invention, since the aromatic polycarbonate resin-B having a specific amount and a specific composition is used as a constituent, the molded article may be given not only excellent flame resistance, but also a low haze value and high transparency. In addition, in the polycarbonate resin composite of the first aspect and the second aspect of the present invention, since the flame retardant composed of an alkali metal salt of an organic sulfonic acid is used, unlike the case where halogen-containing flame retardant or phosphorus-containing flame retardant is used, there will be no more fear of degradation of thermal stability, corrosion of a screw of a molding machine or molding dies in the molding method, suppression of high transparency, or degradation of impact resistance or heat resistance.

## DESCRIPTION OF EMBODIMENTS

The present invention will be explained referring to Examples, but not limited thereto, and various numerals and materials are used only for illustrative purposes.

### Example

The polycarbonate resin composites used in Example 1 to Example 5, Comparative Example 1 to Comparative Example 4, Example 6 to Example 12, and Comparative Example 5 to Comparative Example 8 were prepared by the methods described below. That is, the individual ingredients listed in Tables 2 and 3 were mixed, according to the contents (ratio of addition, in percent by mass) again listed in Tables 2 and 3, in a tumbler for 20 minutes. The mixture was then fed to a single-vented, twin-screw extruder (TEX30XCT) from Japan Steel Works, Ltd., kneaded under conditions including a number of rotation of screw of 200 rpm, a rate of ejection of 20 kg/hour and a barrel temperature of 310°C. The molten resin composite extruded in a strand form was rapidly cooled in a water bath, and pelletized using a pelletizer, to thereby obtain the pellets of the polycarbonate resin composite.

In the transparency test, the obtained pellets were dried at 120°C for 5 hours, and then, injection-molding using an injection-molding machine Model M150AII-SJ from Meiki Co. Ltd., under conditions including a cylinder temperature of 290°C, a mold temperature of 80°C and a molding cycle of 50 seconds, was carried out to thereby obtain 90 mm x 50 mm x 3.0 mm (length x width x thickness) platy (flat plate) moldings as the test pieces. On the other hand, in the flammability (flame resistance) test, the obtained pellets were dried at 120°C for 5 hours, and then, injection-molding using an injection-molding machine Model J50-EP from Japan Steel Works, Ltd., under conditions including a cylinder temperature of 260°C, a mold temperature of 80°C and a molding cycle of 30 seconds, was carried out to thereby obtain 125 mm x 13 mm x 2.0 mm (length x width x thickness) moldings as the test pieces for UL testing.

A series of the aromatic polycarbonate resins-B were synthesized by the methods described below. The obtained aromatic polycarbonate resins-B will be referred to as "PC-1" and "PC-1' ".

In the process of synthesizing PC-1 in Examples 1 to 5, and Comparative Examples 1 to 4, 3.697 kg (16.215 mol) of bisphenol A from-Nippon Steel Chemical Co. Ltd. and 22 g of hydrosulfite were dissolved into 40 liters of aqueous solution containing 5 percent by mass sodium hydroxide. 17 liters of dichloromethane was added thereto, the solution was kept under stirring at 15°C, and 2.1 kg (21.212 mol) of phosgene was then blown thereinto over 15 minutes. Upon completion of blowing of phosgene, 22.3 g of *p-tert*-butylphenol from DIC Corporation was added as a molecular weight modifier, and 10 liters of aqueous solution containing 5 percent by mass sodium hydroxide, and 20 liters of dichloromethane were further added. The mixed solution was vigorously stirred to be emulsified, added with 20 milliliters of triethylamine, and then stirred at 20°C to 25°C for approximately 1 hour, so as to allow the content to polymerize. Upon completion of polymerization, the reaction solution was separated into an aqueous phase and an organic phase, the organic phase was neutralized with phosphoric acid, and repetitively washed with water until the electroconductivity of the washate (aqueous phase) fell down to 10 μS/cm or below. The obtained polymer solution was dropped into warm water kept at 50°C, and the solvent was vaporized off while crushing the solid residue, to thereby obtain a white powdery precipitate. The obtained precipitate was collected by filtration, dried at 120°C for 24 hours, to thereby obtain a polymer powder.

On the other hand, in the process of synthesis of PC-1' in Examples 6 to 12, and Comparative Examples 5 to 8, 3.634 kg (15.939 mol) of bisphenol A from Nippon Steel Chemical Co. Ltd., 0.074 kg (0.276 mol) of 1,1-bis(4-hydroxyphenyl)cyclohexane from Taoka Chemical Co. Ltd., and 30 g of hydrosulfite were dissolved into 40 liters of aqueous solution containing 5 percent by mass sodium hydroxide. 17 liters of dichloromethane was added thereto, the solution was kept under stirring at 15°C, and 2.1 kg (21.212 mol) of phosgene was then blown thereinto over 15 minutes. Upon completion of blowing of phosgene, 22.3 g of *p-tert*-butylphenol from DIC Corporation was added as a molecular weight modifier, and 10 liters of aqueous solution containing 5 percent by mass sodium hydroxide, and 20 liters of dichloromethane were further added. The mixed solution was vigorously stirred to be emulsified, added with 20 milliliters of triethylamine, and then stirred at 20°C to 25°C for approximately 1 hour, so as to allow the content to polymerize. Upon completion of polymerization, the reaction solution was separated into an aqueous phase and an organic phase, the organic phase was neutralized with phosphoric acid, and repetitively washed with water until the electroconductivity of the washate (aqueous phase) fell down to 10 μS/cm or below. The obtained polymer solution was dropped into warm water kept at 50°C, and the solvent was vaporized off while crushing the solid residue, to thereby obtain a white powdery precipitate. The obtained precipitate was collected by filtration, dried at 120°C for 24 hours, to thereby obtain a polymer powder.

The obtained polymers, analyzed by IR absorption spectrometry, showed absorption at around 1770 $cm^{-1}$ assignable to carbonyl group, and absorption at around 1240 $cm^{-1}$ assignable to ether bond, and were confirmed to be polycarbonate resins (PC-1, PC-1') having carbonate bonds. The polycarbonate resins PC-1 and PC-1' were also found to have viscosity-average molecular weights (Mv) of $6.4 \times 10^4$ and $6.5 \times 10^4$, respectively.

Another series of the aromatic polycarbonate resins-B were synthesized by the methods described below. The obtained aromatic polycarbonate resins-B will be referred to as "PC-2' " and "PC-3' ".

More specifically, the synthesis was proceeded similarly to the exemplary synthesis of PC-1', except that the amount of p-*tert*-butylphenol was changed to 26.3 g. The obtained aromatic polycarbonate resin-B (PC-2') was found to have a viscosity-average molecular weight (Mv) of $6.0 \times 10^4$. Still another synthesis was proceeded similarly to the exemplary synthesis of PC-1', except that the amount of use of bisphenol A was changed to 3.440 kg, the amount of use of 1,1-bis(4-hydroxyphenyl)cyclohexane was changed to 0.270 kg, and the amount of use of *p-tert*-butylphenol was changed to 22.1 g. The obtained polycarbonate resin (PC-3') was found to have a viscosity-average molecular weight (Mv) of $6.5 \times 10^4$.

The aromatic polycarbonate resins-A used herein were the aromatic polycarbonate resins (PC-2, PC-3, PC-4) listed in Table 2 below. In Comparative Examples, aromatic polycarbonate resins (PC-5, PC-6, PC-7) listed in Table 2 were used as substitutes for the aromatic polycarbonate resin-B. These resins were commercially available from Mitsubishi Gas Chemical Company, Inc. PC-7 was synthesized similarly to the exemplary synthesis of PC-1, except that the amount of use of *p*-tert-butylphenol was changed to 13.7 g, and the amount of use of dichloromethane after completion of blowing of phosgene was changed to 30 liters. The obtained aromatic polycarbonate resin (PC-7) was found to have a viscosity-average molecular weight of $1.0 \times 10^5$.

Still alternatively, aromatic polycarbonate resins (PC-4', PC-5', PC-6') listed in Table 3 below were used as the aromatic polycarbonate resin-A. In Comparative Examples, aromatic polycarbonate resins (PC-7', PC-8', PC-9', PC-10') listed in Table 3 below were used as substitutes for the aromatic polycarbonate resin-B. These resins were commercially available from Mitsubishi Gas Chemical Company, Inc. PC-9' was synthesized similarly to the exemplary synthesis of PC-1' described in the above, except that the amount of use of *p*-tert-butylphenol was changed to 13.7 g, and the amount of use of dichloromethane after completion of blowing of phosgene was changed to 30 liters. The obtained aromatic polycarbonate resin (PC-9') was found to have a viscosity-average molecular weight of $1.0 \times 10^5$.

In Examples 1 to 12, and Comparative Examples 1 to 8, potassium perfluorobutanesulfone "Biowet C4" from Lanxess was used as a flame retardant. In addition, pentaerythritol tetrastearate "Loxiol VPG861 (trade name)" from Cognis Japan was used as a mold releasing agent (1), and stearic acid "NAA180 (trade name)" from NOF Corporation was used as a mold releasing agent (2). Besides them, used were tris(2,4-di-tert-butylphenyl) phosphite "Adekastab 2112 (trade name)" from ADEKA Corporation as a stabilizer, 2-(2'-hydroxy-5'-*tert*-octylphenyl)-2H-benzotriazole "Seesorb 709 (trade name)" from Shiprokasei Kaisha, Ltd. as a UV absorber, and Solvent Blue 97 "Macrolex Blue (trade name)" from Bayer AG as a colorant.

Results of various measurements of Examples 1 to 5, and Comparative Examples 1 to 4 are shown in Table

2 below, and results of various measurements of Examples 6 to 12, and Comparative Examples 5 to 8 are shown in Table 3 below.

[Table 2]

| | | | | Example | | | | | Comparative Example | | | |
|---|---|---|---|---|---|---|---|---|---|---|---|---|
| | | | | 1 | 2 | 3 | 4 | 5 | 1 | 2 | 3 | 4 |
| | | | M v | % by mass | | | | | | | | |
| Aromatic polycarbonate resin-A | | | | | | | | | | | | |
| PC-2 | H-4000F | BPA-type homopolycarbonate resin | 1.6 $\times 10^4$ | 62 | 52 | 42 | 42 | 62 | 40.2 | 22 | 72 | 62 |
| PC-3 | S-3000F | BPA-type homopolycarbonate resin | 2.1 $\times 10^4$ | 7.72 | 12.72 | 42.72 | 7.72 | 7.587 | 7.72 | 7.72 | 7.72 | 7.65 |
| PC-4 | AL-071 | BPA-type homopolycarbonate resin oligomer | 5.0 $\times 10^3$ | | 5 | | 10 | | | | | |
| Aromatic polycarbonate resin-B | | | | | | | | | | | | |
| PC-1 | Synthesized | | 6.4 $\times 10^4$ | 30 | 30 | 15 | 40 | 30 | | | | 30 |
| Other polycarbonate resins | | | | | | | | | | | | |
| PC-5 | K-4000 | BPA-type homopolycarbonate resin | 3.6 $\times 10^4$ | | | | | | 51.8 | | | |
| PC-6 | E-2000F | BPA-type homopolycarbonate resin | 2.8 $\times 10^4$ | | | | | | | 70 | | |
| PC-7 | Synthesized | | 1.0 $\times 10^5$ | | | | | | | | 20 | |
| Flame retardant | | parts by mass | | 0.08 | 0.08 | 0.08 | 0.08 | 0.08 | 0.08 | 0.08 | 0.08 | 0.15 |
| Mold releasing agent (1) | | parts by mass | | 0.1 | 0.1 | 0.1 | 0.1 | 0.1 | 0.1 | 0.1 | 0.1 | 0.1 |
| Mold releasing agent (2) | | parts by mass | | 0.1 | 0.1 | 0.1 | 0.1 | 0.1 | 0.1 | 0.1 | 0.1 | 0.1 |
| Stabilizer | | parts by mass | | | | | | 0.03 | | | | |
| UV absorber | | parts by mass | | | | | | 0.1 | | | | |
| Colorant | | parts by mass | | | | | | 0,003 | | | | |
| Fluidity | | ($\times 10^{-2}$ $cm^3$/sec) | | 6.8 | 7.5 | 8.2 | 6.4 | 7.0 | 5.8 | 5.3 | 3.7 | 7.0 |
| Transparency | | haze (%) | | 0.7 | 0.48 | 0.42 | 0.79 | 0.72 | 0.68 | 0.47 | 4.21 | 3.72 |
| Flame resistance | | Test piece(s) showed dripping | | 0/10 | 0/10 | 0/10 | 0/10 | 0/10 | 5/10 | 5/10 | - | - |
| | | Test piece(s) showed cotton ignition | | 0/10 | 0/10 | 0/10 | 0/10 | 0/10 | 5/10 | 5/10 | - | - |
| | | TOTAL/MAX | | 37/8 | 38/9 | 45/9 | 34/8 | 41/8 | 62/15 | 39/8 | - | - |
| | | UL94 | | V-0 | V-0 | V-0 | V-0 | V-0 | V-2 | V-2 | - | - |

[Table 3]

| | | | | Example | | | | | | | Comparative Example | | | |
|---|---|---|---|---|---|---|---|---|---|---|---|---|---|---|
| | | | Mv | 6 | 7 | 8 | 9 | 10 | 11 | 12 | 5 | 6 | 7 | 8 |
| | | | $\times 10^4$ | % by mass | | | | | | | | | | |
| Aromatic polycarbonate resin-A | | | | | | | | | | | | | | |
| PC-4' | H-4000F | BPA-type homopolycarbonate resin | 1.6 | 60.5 | 67 | 57 | 62 | 52 | 42 | 60.5 | 40.2 | 22 | 51.2 | 72 |
| PC-5' | S-3000F | BPA-type homopolycarbonate resin | 2.1 | 7.72 | 7.72 | 7.72 | 7.72 | 12.72 | 42.72 | 7.72 | 7.72. | 7.72 | 7.72 | 7.72 |
| PC-6' | AL-071 | BPA-type homopolycarbonate resin oligomer | 0.5 | | | | | 5 | | | | | | |
| Aromatic polycarbonate resin-B | | | | | | | | | | | | | | |
| PC-1' | Synthesized | | 6.5 | 31.5 | 25 | | | 30 | 15 | 31.5 | | | | |
| PC-2' | Synthesized | | 6.0 | | | 35 | | | | | | | | |
| PC-3' | Synthesized | | 6.5 | | | | 30 | | | | | | | |
| Other polycarbonate ressins | | | | | | | | | | | | | | |
| PC--7' | K-4000 | BPA-type homopolycarbonate resin | 3.6 | | | | | | | | 51.8 | | 40 | |
| PC-8' | E-2000F | BPA-type homopolycarbonate resin | 2.8 | | | | | | | | | 70 | | |
| PC-9' | Synthesized | | 10.1 | | | | | | | | | | | 20 |
| PC-10' | PCZ-200 | BPZ-type homopolycarbonate resin | 2.2 | | | | | | | | | | 0.8 | |
| Flame retardant | | parts by mass | | 0.08 | 0.08 | 0.08 | 0.08 | 0.08 | 0.08 | 0.08 | 0.08 | 0.08 | 0.08 | 0.08 |
| Mold releasing agent (1) | | parts by mass | | 0.1 | 0.1 | 0.1 | 0.1 | 0.1 | 0.1 | 0.1 | 0.1 | 0.1 | 0.1 | 0.1 |
| Mold releasing agent (2) | | parts by mass | | 0.1 | 0.1 | 0.1 | 0.1 | 0.1 | 0.1 | 0.1 | 0.1 | 0.1 | 0.1 | 0.1 |
| Stabilizer | | parts by mass | | | | | | | | 0.03 | | | | |
| UV absorber | | parts by mass | | | | | | | | 0.1 | | | | |
| Colorant | | parts by mass | | | | | | | | 0.003 | | | | |
| Fluidity | | ($\times 10^{-2} cm^3$/sec) | | 4.8 | 7.5 | 5.7 | 6.7 | 6.8 | 8.1 | 5.0 | 5.8 | 5.3 | 7.3 | 3.7 |
| Transparency (1) | | haze (%) | | 0.49 | 0.48 | 0.7 | 0.88 | 0.48 | 0.43 | 0.54 | 0.68 | 0.47 | 0.36J | 4.21 |
| Transparency(2) | | haze (%) | | 0.87 | - | 0.85 | 1.32 | - | - | - | - | - | - | - |

(continued)

| | | | Example | | | | | | | Comparative Example | | | |
|---|---|---|---|---|---|---|---|---|---|---|---|---|---|
| | | Mv | 6 | 7 | 8 | 9 | 10 | 11 | 12 | 5 | 6 | 7 | 8 |
| | | $\times 10^4$ | % by mass | | | | | | | | | | |
| Transparency(3) | haze (%) | | 3.39 | - | 2.80 | 4.15 | - | - | - | - | - | - | - |
| Flame resistance | Test piece(s) showed dripping | | 0/10 | 0/10 | 0/10 | 0/10 | 0/10 | 0/10 | 0/10 | 5/10 | 5/10 | 5/10 | - |
| | Test piece(s) showed cotton ignition | | 0/10 | 0/10 | 0/10 | 0/10 | 0/10 | 0/10 | 0/10 | 5/10 | 5/10 | 5/10 | - |
| | TOTALMAX | | 32/7 | 35/7 | 33/8 | 43/8 | 40/9 | 41/9 | 38/8 | 62/15 | 39/8 | 27/4 | - |
| | UL94 | | V-0 | V-0 | V-0 | V-0 | V-0 | V-0 | V-0 | V-2 | V-2 | V-2 | - |

As is clear from Table 2, Examples 1 to 5 showed Q-values of 0.1 $cm^3$/sec or smaller, proving that the test pieces for UL testing (platy molded articles) of 2.0 mm thickness, molded from the aromatic polycarbonate resin composites, were found to satisfy UL94 V-0. They were also found to have haze values as small as 2% or below, proving excellent transparency. As is also clear from Table 3, the test pieces for UL testing (platy molded articles) of 2.0 mm thickness, molded from the aromatic polycarbonate resin composites in Examples 6 to 12, were found to satisfy UL94 V-0. They were also found to have haze values as small as 1% or below, proving excellent transparency.

On the other hand, Comparative Examples 1 and 2 were found not to satisfy UL94 V-0, since they used the aromatic polycarbonate resins (PC-5, PC-6), each of which has a viscosity-average molecular weight of smaller than $5x10^4$, in place of the aromatic polycarbonate resins-B, each of which has a viscosity-average molecular weight of $5x10^4$ to $9x10^4$ used in Examples 1 to 5, and also since the mass percentage of the aromatic polycarbonate resins (PC-5, PC-6) exceeded 50 percent by mass. Comparative Example 3 was found to have a high haze value, proving poor transparency, since the aromatic polycarbonate resin (PC-7), which has a viscosity-average molecular weight of $1x10^5$ or larger, was used in place of the aromatic polycarbonate resin-B. Comparative Example 4 was found to have a high haze value, proving poor transparency, since the addition ratio of the flame retardant was 0.1 parts by mass or above. Additional experiments of flammability (flame resistance), using the test pieces for UL testing molded similarly as described in Examples but using an aromatic polycarbonate resin composite having Q-values exceeding 0.1 $cm^3$/sec, were carried out. UL94 V-0 was not satisfied, due to too large fluidity of the resins.

Comparative Examples 5 to 7 were found not to satisfy UL94 V-0, since they used the aromatic polycarbonate resins (PC-7', PC-8'), each of which has a viscosity-average molecular weight of smaller than $5x10^4$, in place of the aromatic polycarbonate resins-B, each of which has a viscosity-average molecular weight of $5x10^4$ to $9x10^4$ used in Examples 6 to 12, and also since, in Comparative Examples 5 and 6, the addition ratio of the aromatic polycarbonate resins (PC-7', PC-8') exceeded 50 percent by mass. Comparative Example 8 was found to have a high haze value, proving poor transparency, since the aromatic polycarbonate resin (PC-9'), which has a viscosity-average molecular weight of $1x10^5$ or larger, was used in place of the aromatic polycarbonate resin-B.

## Claims

1. A transparent and flame-retardant aromatic polycarbonate resin composite including:

   (A) 100 parts by mass of a transparent aromatic polycarbonate resin composed of 99 percent by mass to 50 percent by mass of an aromatic polycarbonate resin-A with a viscosity-average molecular weight of $3x10^3$ to $2.5x10^4$, and 1 percent by mass to 50 percent by mass of an aromatic polycarbonate resin-B with a viscosity-average molecular weight of $5x10^4$ to $9x10^4$, wherein the viscosity-average molecular weight is determined according to the method disclosed in the specification, and,
   (B) $5x10^{-3}$ parts by mass to $9x10^{-2}$ parts by mass of a flame retardant composed of an alkali metal salt of an organic sulfonic acid,

   wherein a test piece for UL testing of 2.0 mm thickness molded using the aromatic polycarbonate resin composite satisfies UL94V-0,
   a platy molded article of 3.0 mm thickness molded using the aromatic polycarbonate resin composite shows a haze value of 2% or smaller, and

   a) the transparent and flame-retardant aromatic polycarbonate resin composite shows a Q-value of 0.1 $cm^3$/sec or smaller, the Q-value being the amount of molten resin flowing out from an orifice of 1 mm in diameter and 10 mm in length of a Koka flow tester, at 280°C under a load of $1.57x10^7$ Pa,or
   b) the aromatic polycarbonate resin-B is composed of a copolymerized polycarbonate resin composed of 99.9 percent by mass to 90 percent by mass of 2,2-bis(4-hydroxyphenyl)propane [=bisphenol A], and 0.1 percent by mass to 10 percent by mass of a component represented by the formula [1] below,

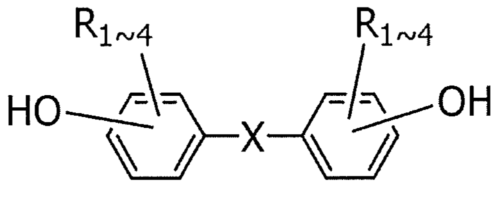

[ 1 ]

   where in the formula [1], each of $R_1$ to $R_4$ independently represents hydrogen atom, fluorine atom, chlorine atom,

bromine atom, iodine atom, $C_{1-9}$ alkyl group, $C_{1-5}$ alkoxy group, $C_{6-12}$ aryl group, $C_{2-5}$ alkenyl group or $C_{7-17}$ aralkyl group, each of the groups may have a substituent, and the substituent possibly bound to a carbon atom in any of these groups is a $C_{1-5}$ alkyl group, $C_{2-5}$ alkenyl group or $C_{1-5}$ alkoxy group,

X represents:

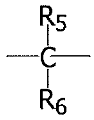 ,

-S-, $-(CH_2)a-$, -O-, -SO- , -CO-, $-SO_2-$

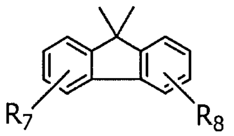 , 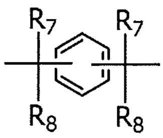 or 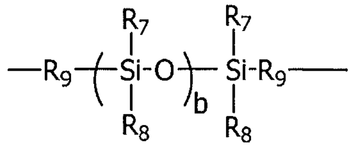

where each of $R_5$ and $R_6$ independently represents hydrogen atom, fluorine atom, chlorine atom, bromine atom, iodine atom, $C_{1-9}$ alkyl group, $C_{1-5}$ alkoxy group, $C_{6-12}$ aryl group, $C_{2-5}$ alkenyl group or $C_{7-17}$ aralkyl group, each of the groups may have a substituent; or, $R_5$ and $R_6$ may be groups which combine together to form a carbocycle or heterocycle, and the substituent possibly bound to a carbon atom in any of these groups is a $C_{1-5}$ alkyl group, $C_{1-5}$ alkoxy group, $C_{2-5}$ alkenyl group, fluorine atom, chlorine atom, bromine atom or iodine atom; each of $R_7$ and $R_8$ independently represents hydrogen atom, fluorine atom, chlorine atom, bromine atom, iodine atom, $C_{1-9}$ alkyl group, $C_{1-5}$ alkoxy group or $C_{6-12}$ aryl group, each of the groups may have a substituent, and the substituent possibly bound to a carbon atom in any of these groups is a $C_{1-5}$ alkyl group, $C_{1-5}$ alkoxy group, fluorine, chlorine, bromine or iodine; and $R_9$ is a $C_{1-9}$ alkylene group which may have a substituent; "a" represents an integer from 0 to 20, and "b" represents an integer from 1 to 500.

2. The transparent and flame-retardant aromatic polycarbonate resin composite according to claim 1 as defined in a), wherein the viscosity-average molecular weight of the aromatic polycarbonate resin-B is $5x10^4$ to $7x10^4$.

3. The transparent and flame-retardant aromatic polycarbonate resin composite according to claim 1 as defined in a) or 2, wherein at least one species of additives selected from the group consisting of a thermal stabilizer, an antioxidant, a UV absorber, a mold releasing agent and a colorant is contained.

4. The transparent and flame-retardant aromatic polycarbonate resin composite according to claim 1 as defined in b), wherein the component represented by the formula [1] includes 2,2-bis(4-hydroxy-3-methylphenyl)propane, bis(4-hydroxyphenyl)ether, 1,1-bis(4-hydroxyphenyl)cyclohexane or 1,1-bis(4-hydroxyphenyl)-1-phenylethane.

5. The transparent and flame-retardant aromatic polycarbonate resin composite according to claim 4, wherein the component represented by the formula [1] includes 1,1-bis(4-hydroxyphenyl)cyclohexane.

6. The transparent and flame-retardant aromatic polycarbonate resin composite according to claim 5, wherein the aromatic polycarbonate resin-B is composed of 2,2-bis(4-hydroxyphenyl)propane of 99.9 percent by mass to 95 percent by mass and 1,1-bis(4-hydroxyphenyl)cyclohexane
of 5 percent by mass to 0.5 percent by mass.

7. The transparent and flame-retardant aromatic polycarbonate resin composite according to claim 1 as defined in b) or any one of claims 4 to 6, wherein at least one species of additives selected from the group consisting of a thermal stabilizer, an antioxidant, a UV absorber, a mold releasing agent and a colorant is contained.

8. A molded article molded obtained by using the transparent and flame-retardant aromatic polycarbonate resin composite according to any one of claims 1 to 7.

## Patentansprüche

1. Transparente und flammenhemmende aromatische Polycarbonat-Kunststoffzusammensetzung, einschließend:

(A) 100 Gew.-Teile eines transparenten aromatischen Polycarbonat-Kunststoffs, bestehend zu 99 Gew.-% bis 50 Gew.-% aus einem aromatischen Polycarbonat-Kunststoff-A mit einem Viskositäts-Zahlenmittelmolekulargewicht von $3x10^3$ bis $2,5x10^4$, und 1 Gew.-% bis 50 Gew.-% eines aromatischen Polycarbonat-Kunststoffs-B mit einem Viskositäts-Zahlenmittelmolekulargewicht von $5x10^4$ bis $9x10^4$, wobei das Viskositäts-Zahlenmittelmolekulargewicht bestimmt wird gemäß dem Verfahren wie in der Beschreibung offenbart, und
(B) $5x10^{-3}$ Gew.-Teile bis $9x10^{-2}$ Gew.-Teile eines flammenhemmenden Mittels, bestehend aus einem Alkalimetallsalz einer organischen Sulfonsäure,
worin ein Teststück für die UL-Untersuchung mit 2,0 mm Dicke geformt unter Verwendung der aromatischen Polycarbonat-Kunststoffzusammensetzung UL94V-0 genügt,
ein flacher geformter Gegenstand mit einer Dicke von 3,0 mm geformt unter Verwendung der aromatischen Polycarbonat-Kunststoffzusammensetzung zeigt einen Trübungswert von 2% oder geringer, und

a) die transparente und flammenhemmende aromatische Polycarbonat-Kunststoffzusammensetzung zeigt einen Q-Wert von 0,1 $cm^3$/sec oder geringer, wobei der Q-Wert die Menge an geschmolzenem Kunststoff angibt, die aus einer Öffnung eines Durchmessers von 1 mm und einer Länger von 10 mm eines Koka-Flusstesters fließt, bei 280°C unter einem Lastwert von $1,57x10^7$ Pa, oder
b) der aromatische Polycarbonat-Kunststoff-B besteht aus einem copolymerisierten Polycarbonat-Kunststoff, bestehend aus 99,9 Gew.-% bis 90 Gew.-% 2,2-bis(4-Hydroxyphenyl)propan [=Bisphenol A], und 0,1 Gew.-% bis 10 Gew.-% eines Bestandteils wiedergegeben durch die Formel [1] unten,

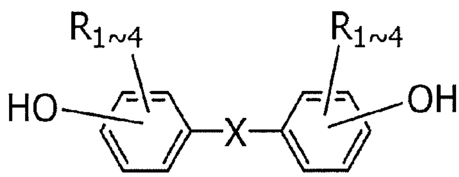 [1]

,

worin in der Formel [1] jedes von $R_1$ bis $R_4$ unabhängig voneinander für ein Wasserstoffatom, ein Fluoratom, Chloratom, Bromatom, Iodatom, $C_{1-9}$-Alkylgruppe, $C_{1-5}$-Alkoxygruppe, $C_{6-12}$-Arylgruppe, $C_{2-5}$-Alkenylgruppe oder $C_{7-17}$-Aralkylgruppe steht, wobei jede dieser Gruppen einen Substituenten aufweisen kann, und der gegebenenfalls an ein Kunststoffatom gebundene Substituent in einer beliebigen dieser Gruppen eine $C_{1-5}$-Alkylgruppe, $C_{2-5}$-Alkenylgruppe oder $C_{7-5}$-Alkoxygruppe ist,
X steht für:

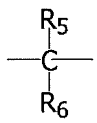 ,

-S- , $-(CH_2)a-$, -O-, -SO-, -CO-, $-SO_2-$

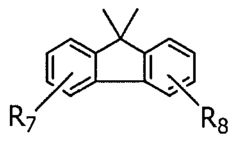 , 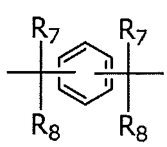 or 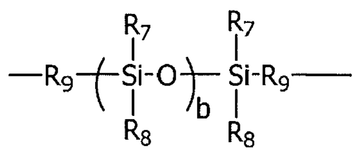

,

worin jedes $R_5$ und $R_6$ unabhängig voneinander für ein Wasserstoffatom, ein Fluoratom, Chloratom, Bromatom, Iodatom, $C_{1-9}$-Alkylgruppe, $C_{1-5}$-Alkoxygruppe, $C_{6-12}$-Arylgruppe, $C_{2-5}$-Alkenylgruppe oder $C_{7-17}$-Aralkylgruppe steht, wobei jede dieser Gruppen einen Substituenten aufweisen kann; oder $R_5$ und $R_6$ können miteinander verbunden sein unter Bildung eines Carbozyklus oder Heterozyklus, und der gegebenenfalls an ein Kohlenstoffatom in einer beliebigen dieser Gruppen gebundene Substituent ist eine $C_{1-5}$-Alkylgruppe, $C_{1-5}$-Alkoxygruppe, $C_{2-5}$-Alkenylgruppe, Fluoratom, Chloratom, Bromatom oder Iodatom; jedes von $R_7$ und $R_8$ steht unabhängig voneinander für ein Wasserstoffatom, Fluoratom, Chloratom, $C_{1-9}$-Alkylgruppe, $C_{1-5}$-Alkoxygruppe oder $C_{6-12}$-Arylgruppe, wobei jede dieser Gruppen einen Substituenten aufweisen kann, und der gegebenenfalls an ein Kohlenstoffatom in einer beliebigen dieser Gruppen gebundene Substituent ist eine $C_{1-5}$-Alkylgruppe, $C_{1-5}$-Alkoxygruppe, Fluor, Chlor, Brom oder Iod; und $R_9$ ist eine $C_{1-9}$-Alkylengruppe, die einen Substituenten haben kann; "a" steht für eine Ganzzahl von 0 bis 20 und "b" steht für eine Ganzzahl von 1 bis 500.

2. Transparente und flammenhemmende aromatische Polycarbonat-Kunststoffzusammensetzung gemäß Anspruch 1, wie in a) definiert, worin das Viskositäts-Zahlenmittelmolekulargewicht des aromatischen Polycarbonat-Kunststoffs-B $5x10^4$ bis $7x10^4$ ist.

3. Transparente und flammenhemmende aromatische Polycarbonat-Kunststoffzusammensetzung gemäß Anspruch 1, wie in a) definiert oder 2, worin mindestens eine Spezies der Additive ausgewählt aus der Gruppe bestehend aus einem thermischen Stabilisator, einem Antioxidationsmittel, einem UV-Absorber, einem Formfreigebungsmittel und einem Farbstoff enthalten ist.

4. Transparente und flammenhemmende aromatische Polycarbonat-Kunststoffzusammensetzung gemäß Anspruch 1, wie in b) definiert, worin der Bestandteil wiedergegeben durch die Formel [1] 2,2-bis(4-Hydroxy-3-methylphenyl) propan, bis(4-Hydroxyphenyl) ether, 1,1-bis(4-Hydroxyphenyl) cyclohexan oder 1,1-bis(4-Hydroxyphenyl)-1-phenylethan einschließt.

5. Transparente und flammenhemmende aromatische Polycarbonat-Kunststoffzusammensetzung gemäß Anspruch 4, worin der Bestandteil wiedergegeben durch die Formel [1] 1,1-bis(4-Hydroxyphenyl) cyclohexan einschließt.

6. Transparente und flammenhemmende aromatische Polycarbonat-Kunststoffzusammensetzung gemäß Anspruch 5, worin der aromatische Polycarbonat-Kunststoff-B aus 2,2-bis(4-Hydroxyphenyl) propan mit 99,9 Gew.-% bis 95 Gew.-% und 1,1-bis(4-Hydroxyphenyl) cyclohexan mit 5 Gew.-% bis 0,5 Gew.-% besteht.

7. Transparente und flammenhemmende aromatische Polycarbonat-Kunststoffzusammensetzung gemäß Anspruch 1, wie in b) definiert oder gemäß einem der Ansprüche 4 bis 6, worin mindestens eine Spezies der Additive ausgewählt aus der Gruppe bestehend aus einem thermischen Stabilisator, einem Antioxidationsmittel, einem UV-Absorber, einem Formfreigebungsmittel und einem Farbstoff enthalten ist.

8. Geformter Gegenstand geformt erhalten unter Verwendung der transparenten und flammenhemmenden aromatischen Polycarbonat-Kunststoffzusammensetzung gemäß irgendeinem der Ansprüche 1 bis 7.

**Revendications**

1. Composite transparent et ignifuge à base de résine de polycarbonate aromatique, comprenant :

(A) 100 parties en masse d'une résine de polycarbonate aromatique transparente constituée, en une proportion de 99 % en masse à 50 % en masse, d'une résine A de polycarbonate aromatique présentant une masse molaire moyenne viscosimétrique de $3x10^3$ à $2,5x10^4$, et, en une proportion de 1 % en masse à 50 % en masse, d'une résine B de polycarbonate aromatique présentant une masse molaire moyenne viscosimétrique de $5x10^4$ à $9x10^4$, la masse molaire moyenne viscosimétrique étant déterminée conformément au procédé décrit dans la spécification,
(B) et $5x10^{-3}$ partie en masse à $9x10^{-2}$ partie en masse d'un agent ignifugeant constitué d'un sel de métal alcalin d'un acide sulfonique organique, étant entendu que :

- une éprouvette pour essai UL de 2,0 mm d'épaisseur, moulée à partir du composite à base de résine de polycarbonate aromatique, répond à la norme UL94 V-0,
- un article moulé stratifié de 3,0 mm d'épaisseur, moulé à partir du composite à base de résine de polycarbonate aromatique, présente un trouble de valeur inférieure ou égale à 2 %,

et

(a) le composite transparent et ignifuge à base de résine de polycarbonate aromatique présente une valeur de Q inférieure ou égale à 0,1 $cm^3/s$, cette valeur de Q désignant la quantité de résine fondue qui s'écoule par l'orifice de 1 mm de diamètre et 10 mm de longueur d'un appareil d'essai d'écoulement Koka, à une température de 280°C et sous une charge de $1,57x10^7$ Pa,
(b) ou la résine B de polycarbonate aromatique est composée d'une résine de polycarbonate copolymérisée constituée, en une proportion de 99,9 % en masse à 90 % en masse, de 2,2-bis(4-hydroxy-phényl)-propane [i.e. bisphénol A], et, en une proportion de 0,1 % en masse à 10 % en masse, d'un constituant représenté par la formule [1] suivante :

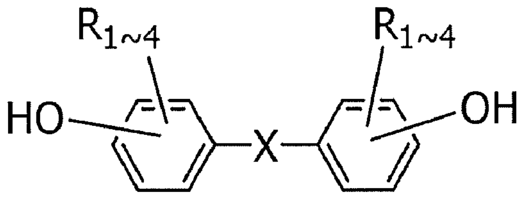

[1]

dans laquelle formule [1]

- chacun des symboles $R_1$ à $R_4$ représente indépendamment un atome d'hydrogène, de fluor, de chlore, de brome ou d'iode, ou un groupe alkyle en $C_{1-9}$, alcoxy en $C_{1-5}$, aryle en $C_{6-12}$, alcényle en $C_{2-5}$ ou aralkyle en $C_{7-17}$, chacun des groupes peut porter un substituant, et le substituant susceptible d'être lié à un atome de carbone de l'un quelconque de ces groupes est un groupe alkyle en $C_{1-5}$, alcényle en $C_{2-5}$ ou alcoxy en $C_{1-5}$ ;
- X représente un chaînon de formule :

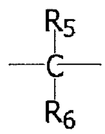

,

-S- , $-(CH_2)a-$, -O- , -SO- , -CO- , $-SO_2-$

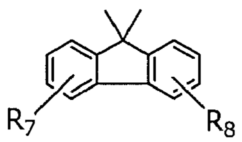

,

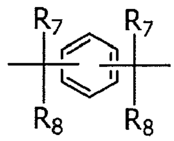

ou

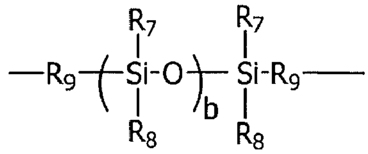

où
- chacun des symboles $R_5$ et $R_6$ représente indépendamment un atome d'hydrogène, de fluor, de chlore, de brome ou d'iode, ou un groupe alkyle en $C_{1-9}$, alcoxy en $C_{1-5}$, aryle en $C_{6-12}$, alcényle en $C_{2-5}$ ou aralkyle en $C_{7-17}$, et chacun des groupes peut porter un substituant ; ou $R_5$ et $R_6$ peuvent représenter des groupes qui s'unissent pour former ensemble un carbocycle ou un hétérocycle, et le substituant susceptible d'être lié à un atome de carbone de l'un quelconque de ces groupes est un groupe alkyle en $C_{1-5}$, alcoxy en $C_{1-5}$ ou alcényle en $C_{2-5}$, ou un atome de fluor, de chlore, de brome ou d'iode ;
- chacun des symboles $R_7$ et $R_8$ représente indépendamment un atome d'hydrogène, de fluor, de chlore, de brome ou d'iode, ou un groupe alkyle en $C_{1-9}$, alcoxy en $C_{1-5}$ ou aryle en $C_{6-12}$, chacun des groupes peut porter un substituant, et le substituant susceptible d'être lié à un atome de carbone de l'un quelconque de ces groupes est un groupe alkyle en $C_{1-5}$ ou alcoxy en $C_{1-5}$, ou un atome de fluor, de chlore, de brome ou d'iode ;
- $R_9$ représente un groupe alcanediyle en $C_{1-9}$ qui peut porter un substituant ;
- l'indice « a » est un entier valant de 0 à 20 ;
- et l'indice « b » est un entier valant de 1 à 500.

**2.** Composite transparent et ignifuge à base de résine de polycarbonate aromatique selon la revendication 1 et répondant à la définition (a), dans lequel la masse molaire moyenne viscosimétrique de la résine B de polycarbonate aromatique vaut de $5x10^4$ à $7x10^4$.

3. Composite transparent et ignifuge à base de résine de polycarbonate aromatique selon la revendication 1 et répondant à la définition (a), ou selon la revendication 2, dans lequel se trouve au moins une des espèces d'adjuvants choisie dans l'ensemble formé par un stabilisant à la chaleur, un antioxydant, un absorbeur UV, un agent de démoulage et un colorant.

4. Composite transparent et ignifuge à base de résine de polycarbonate aromatique selon la revendication 1 et répondant à la définition (b), dans lequel le constituant représenté par la formule [1] comprend du 2,2-bis(4-hydroxy-3-méthyl-phényl)-propane, du bis(4-hydroxy-phényl)-éther, du 1,1-bis(4-hydroxy-phényl)-cyclohexane ou du 1,1-bis(4-hydroxy-phényl)-1-phényl-éthane.

5. Composite transparent et ignifuge à base de résine de polycarbonate aromatique selon la revendication 4, dans lequel le constituant représenté par la formule [1] comprend du 1,1-bis(4-hydroxy-phényl)-cyclohexane.

6. Composite transparent et ignifuge à base de résine de polycarbonate aromatique selon la revendication 5, dans lequel la résine B de polycarbonate aromatique est constituée de 2,2-bis(4-hydroxy-phényl)-propane en une proportion de 99,9% en masse à 95% en masse, et de 1,1-bis(4-hydroxy-phényl)-cyclohexane en une proportion de 5 % en masse à 0,5 % en masse.

7. Composite transparent et ignifuge à base de résine de polycarbonate aromatique selon la revendication 1 et répondant à la définition (b), ou selon l'une quelconque des revendications 4 à 6, dans lequel se trouve au moins une des espèces d'adjuvants choisie dans l'ensemble formé par un stabilisant à la chaleur, un antioxydant, un absorbeur UV, un agent de démoulage et un colorant.

8. Article moulé obtenu à partir d'un composite transparent et ignifuge à base de résine de polycarbonate aromatique selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H02251561 A
- JP H0959505 A
- JP H11323118 A